Europäisches Patentamt

(19) European Patent Office

Office européen des brevets

(11) Publication number: **0 009 359**
**B1**

(12) **EUROPEAN PATENT SPECIFICATION**

(45) Date of publication of patent specification: **18.05.83**

(51) Int. Cl.³: **A 01 K 1/00, F 24 F 7/06**

(21) Application number: **79301851.6**

(22) Date of filing: **10.09.79**

(54) Gas flow apparatus, especially for a ventilator for large buildings.

(30) Priority: **18.09.78 CA 311509**

(43) Date of publication of application:
**02.04.80 Bulletin 80/7**

(45) Publication of the grant of the patent:
**18.05.83 Bulletin 83/20**

(84) Designated Contracting States:
**AT BE CH DE FR GB IT LU NL SE**

(56) References cited:
**AT - B - 315 426**
**CH - A - 522 179**
**US - A - 2 750 868**
**US - A - 4 079 665**

(73) Proprietor: **AXIS PRODUCTS LIMITED**
**Box 1**
**Ballinafad Ontario, NOB 1HO (CA)**

(72) Inventor: **Martin, Stanley Irvin**
**R.R. 1**
**Ailsa Craig Ontario (CA)**
Inventor: **Martin, Edward Joseph**
**Box 1**
**Ballinafad Ontario (CA)**

(74) Representative: **Collingwood, Anthony Robert et al,**
**GEORGE FUERY & COMPANY Whitehall Chambers 23 Colmore Row**
**Birmingham B3 2BL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Gas flow control apparatus, especially for a ventilator for large buildings.

This invention relates to gas flow control apparatus and, in particular, to a ventilator for large buildings such as barns, and other agricultural buildings.

The installation of a forced ventilation for existing buildings such as barns and other agricultural buildings presents certain problems. In the first place, such barns are built of a wide variety of materials, and often with somewhat haphazard designs. In many cases such buildings were not originally intended for housing livestock, and are essentially simply storage buildings. Conversion of such buildings for housing livestock requires the installation of ventilation. However such ventilation as has been provided in the past has been unsatisfactory in many cases. Air circulation should extend throughout the full extent of the floor area of the building. If air circulation is localised, or concentrated in certain specific areas, for example, around the ventilators themselves, then the livestock will tend to congregate there, and may injure themselves. On the other hand livestock located in parts of the building which are poorly ventilated, may become ill, due to over heating, stagnating air and the like.

In U.S.—A—4079665, there is proposed a barn ventilator which overcomes many of these disadvantages. However, it was relatively expensive to manufacture, and did not operate effectively in all weather conditions. In particular it was found to ice up during cold weather. In addition, it was relatively difficult to service and repair.

According to the present invention considered broadly we provide gas flow control apparatus comprising first and second ducts, first and second means associated respectively with said first and second ducts for creating oppositely directed flows through said ducts, a transfer chamber having inlet and outlet means and communicating with said first and second ducts and adjustable power-operated flow director means associated with the transfer chamber and operable to redirect flow from the second duct back into the first duct, characterised in that said flow director means comprises two part damper means mounted within said transfer chamber, both said parts of the damper means being movable towards and away from one another and being operable to intercept the flow from said second duct and redirect it into said first duct, linkage means being provided to interconnect said two parts of the damper means whereby the same move in unison in opposite directions in response to operation of power operated means connected with the damper means.

According to a more specific aspect of the invention we provide ventilation apparatus for barns and the like, said apparatus comprising: housing means of generally rectangular shape;

ducting means within said housing means defining first and second ducts, said housing means being adapted to fit through a portion of a said barn or the like, and having an inside end and an outside end, the inside end being located on the inside of said barn portion; inlet fan means mounted on said housing, and communicating with said first duct thereof for drawing air inwardly through said first duct into said barn; outlet fan means mounted on said housing in communication with said second duct, for drawing air from the interior of said barn and expelling the same through said second duct; transfer chamber means communicating with the outer end of said ducting means; air outlet means communicating with said transfer chamber means for discharge of air therefrom, said transfer chamber means communicating with both said ducts of said housing, and permitting transfer of air from one duct to the other; and adjustable power-operated flow director means associated with the transfer chamber means, said flow director means being responsive to temperature changes in said barn for redirecting flow from the second duct back into the first duct, characterised in that said flow director means comprises two part damper means movably mounted within said transfer chamber means, both said parts of said damper means being movable towards and away from one another and being operable to intercept air exiting from said second duct and re-direct it into said first duct, linkage means being provided to interconnect said two parts of said damper means whereby the same move in unison in opposite directions in response to operation of power operated means connected with said two part damper means.

The various features of novelty which characterise the invention are pointed out with particularity in the claims annexed to and forming a part of this disclosure. For a better understanding of the invention, its operating advantages and specific objects attained by its use, reference should be had to the accompanying drawings and descriptive matter in which there are illustrated and described preferred embodiments of the invention.

In the drawings:

Figure 1 is a sectional side elevation of a ventilator according to the invention;

Figure 2 is a greatly enlarge sectional side elevation showing details of the damper means;

Figure 3 is a partial perspective illustration showing the fan portion of the apparatus swung away from the remainder;

Figure 4 is a schematic circuit diagram; and

Figure 5 is a schematic illustration showing an alternate use of the invention.

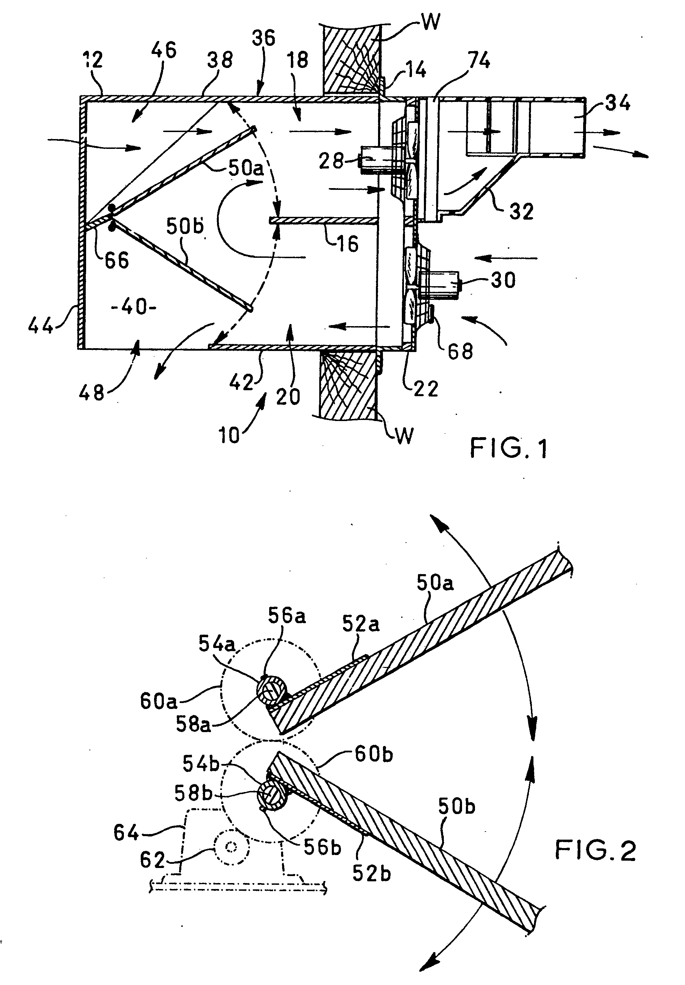

Referring now to Figure 1, the ventilator 10 according to the invention will be seen to comprise a generally rectangular housing 12, mounted in a suitable rectangular opening in a wall W. At the inner end of the housing 12 there is a frame 14, by means of which it may be fastened on the interior surface of wall W, within the building interior. Within the housing 12, there is a horizontal partition wall 16 dividing housing 12 into an upper duct 18 and a lower duct 20. Fastened at the inner end of housing 12, to the frame 14, is a mounting frame assembly 22. Mounting frame 22 is of generally rectangular construction, and has a horizontal cross member more or less in the form of a letter H. It is movably mounted on the frame 14 by any suitable means. In this embodiment of the invention, such means comprise hinges 24 and lock 26 on the opposite side of frame 22. In this way, when the lock 26 is released, mounting frame 22 may be swung away to one side of the frame 14 on housing 12.

An intake fan and associated motor 28, is mounted on the upper portion of mounting frame 22, and an outlet fan and associated motor 30 is mounted on the lower portion of mounting frame 22. The fans 28, 30 are operated to drive air in opposite directions. A generally funnel-shaped duct section 32 is mounted on the upper portion of mounting frame 22 in registration with intake fan 28, and having generally fan-shaped outlet nozzles 34. It will also be noted that housing 12 is fastened within frame 14 in a slightly downwardly angled orientation. In this way, when frame 14 is mounted plumb on the inside of the wall, the upper surface of the housing 12 will be angled downwardly. In this way any rain or precipitation falling on housing 12 will tend to be shed outside the building.

On the outer end of housing 12, a transfer chamber 36 is provided. In the case of Figure 1, the transfer chamber 36 is simply constituted by extensions of the walls forming housing 12. It will however, of course, be appreciated that where the wall W is thicker, or where for example it may be desirable to connect duct work between housing 12 and the chamber 36, then they will be made as separate units, and may be joined by any suitable attachment means, on site during assembly. The transfer chamber 36 consists of an upper wall 38, two side walls 40, a lower wall 42 and an end wall 44. A pair of generally triangular inlet openings 46 are provided in side walls 40, on the upper outer corners thereof. An outlet opening 48 is provided in bottom wall 42, directed downwardly, and located towards the outer end thereof.

Within transfer chamber 36 a pair of movable damper blades namely upper damper blade 50a and lower damper blade 50b are provided, and are mounted in a swingable manner as will be seen in more detail in Figure 2. Damper blades 50a and 50b are mounted on respective mounting brackets 52a, 52b which are in turn fastened for example by welding, to transverse hollow cylindrical sleeves 54a, 54b provided with grub screws 56a, 56b. Sleeves 54a and b are themselves mounted on respective drive shafts 58a, 58b, and are fastened thereto by their respective grub screws 56a and b. The drive shafts 58a, b are journalled in suitable journals in opposite side walls 40 of transfer chamber 36. On one such side wall 40, the drive shafts 50a, b extend completely through the side, and are provided with identical meshing gears 60a, 60b. Gears 60a, b mesh so that the two damper blades 50a, b may be swung towards or away from one another in unison, but cannot be swung independently of one another.

One of gears 60a, b is itself driven by a drive gear 62 and associated drive motor 64, mounted on a suitable mounting (on the exterior of side wall 40). Damper blades 50a, b extend completely across from side wall to side wall of chamber 36, and are sufficiently long that they just overlap the free edge of partition 16 of housing 12. The small space between back wall 44 and the inward edges of damper blade 50a, b is closed off by means of a downwardly angled partition 66.

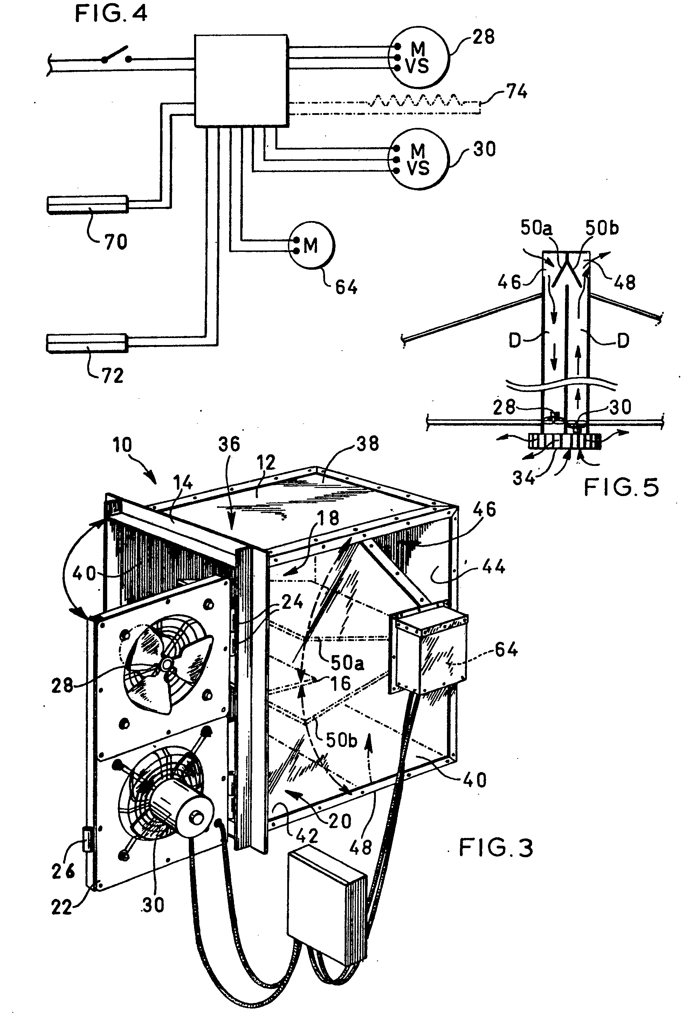

Two separate thermostats are attached adjacent to the outlet fan 30, being shown simply as 68. It will, of course, be appreciated two such thermostats are in fact incorporated, although they are not shown separately. Preferably they are suitably insulated from the metal of the cage surrounding fan 30 so that they provide a true reading of the air passing through fan 30 rather than the temperature of the metal surrounding it. As shown in the circuit diagram of Figure 4, the two thermometers or thermosensitive devices 68 are connected to two separate adjustable thermostats 70 and 72. Thermostat 70 is connected to control the fans 28 and 30, and thermostat 72 is connected to control motor 64. Preferably, the motors of fans 28 and 30 are multi-winding motors so that they may run at two speeds i.e. intermediate speed and a top speed, or if desired, a greater number of different speeds may be provided. Motor 64 is so controlled that it will set the damper blades 50a, b in any desired position, ranging from fully open to fully closed.

In operation, when the damper blades 50a, b are closed i.e. are rotated so that they are lying parallel against the partition 16, fresh air will be drawn in through openings 46, by fan 28, and will be ejected into the interior of the building through nozzles 34. Simultaneously, air from within the building, will be withdrawn by fan 30 and ejected through opening 48. Normally, in this mode, the fan motors for fans 28 and 30 will be operating at top speed, so as to produce a maximum continuous air change within the building. This would normally be the condition on a summer day.

When damper blades 50a, b are rotated fully open, they will contact the upper wall 38 and lower wall 42 respectively of chamber 36, thereby completely shutting off openings 46 and 48. In this mode of operation, air will be withdrawn from within the interior of the building by fan 30, and will pass along duct 20 and will then strike damper blade 50b and will be directed upwardly against damper blade 50a. Air will then be drawn back into the building by fan 28, and ejected through nozzles 34. In this mode of operation, there will be no fresh air inducted and no building air exhausted outside the building. There will simply be a continuous circulation of building air. This mode of operation would not normally be experienced continuously for any great length of time even on a cold day in winter. Body heat from the animals will quite quickly raise the air temperature within the building. In practice damper blades 50a, 50b will normally operate somewhere between the fully open and fully closed positions described above.

In such an intermediate position, some fresh air will be inducted through openings 46 and some building air will be recycled by means of a passing upwardly through chamber 36, and will be recycled back into the building. Normally, in this intermediate mode of operation, the fan motors for fan 28 and 30 will be running at a lower speed. However, the transition between low speed and high speed operation of the fans will be dependent upon the adjustment of thermostat 70, and may be selected by the individual owner.

If desired, in extreme climates, some additional form of heating may be provided in the form of the heater unit 74 which may be located in front of fan 28, and controlled by any other suitable thermostats (not shown), such as are well-known in the art. Preferably, such thermostat controls will provide for several levels of heating depending upon the temperature of the incoming air to provide a fully flexible mode of operation.

It will, of course, be appreciated that the transfer chamber 36 of the invention may be utilised in somewhat different layouts. For example, it is sometimes desirable to provide for ventilation through a roof instead of through a wall. In other situations it is desirable for a greater length of duct work between the housing 12 and the transfer chamber 36.

In the embodiment shown in Figure 1, the transfer chamber 36 is essentially simply an endwise extension of the housing 12. However, where greater length of duct work is required, then for example the housing 12 and transfer chamber 36 could be made in separate portions, being divided for example along the chain dotted line L, and lengths of duct work could be connected therein, thereby enabling for example the housing 12 to be located inside the building on a wall, with a length of duct work extending up the wall, and then passing through a wall to the exterior of the building at some other location.

Referring now to Figure 5, it will also be observed that the transfer chamber 36 can be used for a roof mounted ventilator, the transfer chamber 36 simply being shown rotated 90° and being mounted on the upper end of vertical duct work d.

The foregoing is a description of a preferred embodiment of the invention which is given here by way of example only. The invention is not to be taken as limited to any of the specific features as described, but comprehends all such variations thereof as come within the scope of the appended claims.

**Claims**

1. Ventilation apparatus for barns and the like, said apparatus comprising: housing means (12) of generally rectangular shape; ducting means within said housing means defining first and second ducts (18, 20), said housing means being adapted to fit through a portion (W) of a said barn or the like, and having an inside end and an outside end, the inside end being located on the inside of said barn portion (W); inlet fan means (28) mounted on said housing (12), and communicating with said first duct (18) thereof for drawing air inwardly through said first duct (18) into said barn; outlet fan means (30) mounted on said housing (12) in communication with said second duct (20), for drawing air from the interior of said barn and expelling the same through said second duct (20); transfer chamber means (36) communicating with the outer end of said ducting means; air outlet means (48) communicating with said transfer chamber means (36) for discharge of air therefrom, said transfer chamber means (36) communicating with both said ducts (18, 20) of said housing, and permitting transfer of air from one duct to the other; and adjustable power-operated flow director means (50a, 50b) associated with the transfer chamber means (36), said flow director means being responsive to temperature changes in said barn for redirecting flow from the second duct (20) back into the first duct (18), characterised in that said flow director means comprises two part damper means (50a, 50b) movably mounted within said transfer chamber means (36), both said parts (50a, 50b) of said damper means being movable towards and away from one another and being operable to intercept air exiting from said second duct (20) and redirect it into said first duct (18), linkage means (60a, 60b) being provided to interconnect said two parts (50a, 50b) of said damper means whereby the same move in unison in opposite directions in response to operation of power operated means (62, 64) connected with said two part damper means.

2. Gas flow control apparatus comprising first and second ducts (18, 20), first and second means (28, 30) associated respectively with said first and second ducts (18, 20) for creating oppositely directed flows through said ducts (18, 20), a transfer chamber (36) having inlet and outlet means (46, 48) and communicating with said first and second ducts (18, 20) and adjustable power-operated flow director means (50a, 50b) associated with the transfer chamber (36) and operable to redirect flow from the second duct (20) back into the first duct (18), characterised in that said flow director means comprises two part damper means (50a, 50b) mounted within said transfer chamber (36), both said parts (50a, 50b) of the damper means being movable towards and away from one another and being operable to intercept the flow from said second duct (20) and redirect it into said first duct (18), linkage means (60a, 60b) being provided to interconnect said two parts (50a, 50b) of the damper means whereby the same move in unison in opposite directions in response to operation of power operated means (62, 64) connected with the damper means.

3. Gas flow control apparatus for exchanging gaseous fluid from one source with gaseous fluid from another source in varying proportions, and comprising: ducting means (12) defining first and second ducts (18, 20) arranged side by side and having spaced apart axes, said ducting means having a first end and a second end; first means (28) communicating with said first duct (18) for drawing fluid from said one source inwardly through said first duct (18) from said outer end to said inner end; second means (30) communicating with said second duct (20), for drawing fluid from said second source through said second duct (20) from said inner end to said outer end; transfer chamber means (36) connected with said first duct (18) and with said second duct (20) at locations axially spaced apart and separated from one another for transferring varying proportions of fluid from said second duct (20) back into said first duct (18); outlet means (48) communicating with one portion of said transfer chamber means (36) for discharge therefrom of fluid supplied by said second means (30); inlet means (46) communicating with another portion of said transfer chamber means (36) for inlet thereto of fluid for supply to said first duct (18) and adjustable power-operated flow director means (50a, 50b) associated with the transfer chamber means (36), said flow director means being responsive to temperature changes for redirecting flow from the second duct (20) back into the first duct (18), characterised in that said flow director means comprises two part damper means having first and second damper blade means (50a, 50b) movably mounted within said transfer chamber means (36); swingable mounting means (58a, 58b) mounting said blade means (50a, 50b) along adjacent edges, with their swinging axes being spaced apart and parallel to one another and located between said inlet and outlet means (46, 48) in said chamber (36), and with their opposite edges being free and directed towards said ducts (18, 20), said damper blade means (50a, 50b), when swung together lying parallel side by side in closely overlying relation and forming partition means, substantially dividing said transfer chamber (36) into two parallel duct extensions constituting endwise extensions of said first and second ducts (18, 20), having central axes that are parallel and spaced apart, whereby transfer of fluid from one said duct to the other is substantially eliminated, and, when swung apart, said first blade means (50a) moves into the path of said first duct (18) and said second blade means (50b) moves into the path of said second duct (20) thereby causing transfer of at least some fluid from said second duct (20) back into said first duct (18); linkage means (60a, 60b) being provided to interconnect said damper blade means (50a, 50b) whereby the same move in unison in opposite directions in response to operation of power operated means (62, 64) connected with said damper blade means (50a, 50b) for moving the same.

4. Apparatus as claimed in Claim 1 or 2 wherein said two-part damper means comprises two separate damper blades (50a, 50b), and swingable mounting means (52a, 58a, 52b, 58b) mounting each said blade along adjacent edges, with their swinging axes being spaced apart and parallel to one another, and with their opposite edges being free and directed towards said first and second ducts (18, 20) means, said damper blades (50a, 50b), when swung together lying parallel side by side, substantially dividing said transfer chamber (36) into two parallel duct extensions constituting endwise extensions of said first and second ducts (18, 20), whereby transfer from one said duct to the other is substantially eliminated.

5. Apparatus as claimed in Claim 3 or 4 wherein said swingable mounting means comprises parallel spaced apart shafts (58a, 58b), and wherein said linkage means comprises gears (60a, 60b) mounted on respective shafts, in meshing engagement.

6. Apparatus as claimed in any one of Claims 1—5 wherein said transfer chamber (36) comprises a rectangular box-like structure with said inlet means (46) in an upper portion of said box-like structure and said outlet means (48) in a lower portion of said box-like structure.

7. Apparatus as claimed in Claim 6 wherein said damper blades (50a, 50b) are mounted adjacent to a vertical end wall (44) of said box-like structure, and extend therefrom, when in a parallel side by side position, into overlapping relation with a portion (16) of said ducting means.

8. Apparatus as claimed in Claim 1 or any one of Claims 5—7 when appendant to Claim 1 in which the inlet and outlet fan means (28, 30) are incorporated in a fan mounting assembly (22) attached on the inside end of said housing means and being releasably removable therefrom.

9. Apparatus as claimed in Claim 8 wherein said fan mounting assembly (22) is attached to said housing by means of hinges (24) along one edge thereof, and including locking means on another edge whereby the same may be swung to and fro relative to said housing (12), and may be locked into position thereon.

10. Gas flow control apparatus comprising first and second ducts (18, 20), first and second means (28, 30) associated respectively with said first and second ducts (18, 20) for creating oppositely directed flows through said ducts (18, 20), a transfer chamber (36) having inlet and outlet means (46, 48) and communicating with said first and second ducts (18, 20) and adjustable power-operated flow director means (50a, 50b) associated with the transfer chamber (36) and operable to redirect flow from the second duct (20) back into the first duct (18), characterised in that said flow director means comprises two part damper means (50a, 50b) mounted within said transfer chamber (36), both said parts (50a, 50b) of the damper means being movable towards and away from one another with linkage means (60a, 60b) interconnecting them so that they move in unison in opposite directions in response to operation of power operated means (62, 64) connected with the damper means, the arrangement being such that as the two parts (50a, 50b) move towards each other from one extreme position in which they are fully separated the degree of communication between the two ducts (18, 20) via the transfer chamber is progressively restricted whereas the degree of communication between said first duct (18) and the inlet means (46) on the one hand and between said second duct (20) and the outlet means (48) on the other hand is progressively increased.

**Revendications**

1. Appareillage de ventilation pour étables et bâtiments analogues, le dit appareillage comprenant: un moyen en boîtier de forme générale rectangulaire; un moyen formant des conduits à l'intérieur dudit moyen en boîtier et délimitant un premier conduit (18) et un second (20), ledit moyen en boîtier étant adapté à se monter à travers une partie (W) d'une dite étable ou d'un bâtiment comparable et ayant une extrémité intérieure et une extrémité extérieure, l'extrémité intérieure étant placés du côté intérieur de ladite partie d'étable (W); un moyen à ventilateur d'entrée monté sur ledit boîtier (12) et en communication avec ledit premier conduit (18) de ce boîtier pour aspirer l'air intérieurement à travers ledit premier conduit (18) et le faire entrer dans ladite étable; un moyen à ventilateur de sortie (30) monté sur ledit boîtier (12) en communication avec ledit second conduit (20) pour aspirer l'air de l'intérieur de ladite étable et le refouler à travers ledit second conduit (20); un moyen à chambre de transfert (36) communiquant avec l'extrémité extérieure dudit moyen formant des conduits; un moyen à sortie d'air (48) communication avec ledit moyen à chambre de transfert (36) pour évacuer l'air de cette chambre, ledit moyen à chambre de transfert (36) communiquant avec lesdits deux conduits (18, 20) dudit boîtier, et permettant le transfert d'air de l'un des conduits à l'autre; et un moyen de commande de l'écoulement (50a, 50b) actionné par force motrice, associé au moyen à chambre de transfert (36), le dit moyen de commande de l'écoulement répondant aux variations de température dans ladite étable pour renvoyer l'écoulement du second conduit (20) au premier conduit (18), caractérisé en ce que ledit moyen de commande de l'écoulement comprend un moyen formant registre à deux volets (50a, 50b) montés de façon mobile à l'intérieur dudit moyen à chambre de transfert (36), lesdits deux volets (50a, 50b) dudit moyen de commande étant mobiles en se rapprochant et en s'écartant l'un de l'autre et pouvant agir pour intercepter une sortie d'air dudit second conduit (20) en renvoyant l'air dans ledit premier conduit (18), un moyen de liaison (60a, 60b) étant prévu pour relier entre eux lesdits deux volets (50a, 50b) dudit moyen de commande de l'écoulement de façon que ces volets de déplacent à l'unisson en sens contraires en réponse au fonctionnement d'un moyen actionné par force motrice (62, 64) accouplé au dit moyen à deux volets.

2. Dispositif de commande de l'écoulement de gaz comprenant un premier conduit (18) et un second (20), un premier moyen (28) et un second (30) associés respectivement aux dits premier et second conduits (18, 20) pour établir des écoulements de sens contraires à travers lesdits conduits (18, 20), une chambre de transfert (36) ayant des moyens d'entrée et de sortie (46, 48) et communiquant avec lesdits premier et second conduits (18, 20) et des moyens de commande actionnés par force motrice (50a, 50b) associés à la chambre de transfert (36) et pouvant agir pour renvoyer l'écoulement provenant du second conduit (20) en retour dans le premier conduit (18), caractérisé en ce que ledit moyen de commande d'écoulement comprend deux volets (50a, 50b) montés à l'intérieur de la dite chambre de transfert (36), lesdits deux volets (50a, 50b) pouvant se rapprocher et s'écarter l'un de l'autre et pouvant agir pour intercepter l'écoulement provenant dudit second conduit (20) et le renvoyer dans ledit premier conduit (18), un moyen de liaison (60a, 60b) étant prévu pour relier entre eux lesdits volets (50a, 50b) du moyen de commande à volets de façon que ces volets se déplacent à l'unisson en sens contraires en réponse au fonctionnement d'un moyen actionné par force motrice (62, 64) relié au moyen de commande à volets.

3. Dispositif de commande de l'écoulement de gaz pour remplacer le fluide gazeux provenant d'une source par le fluide gazeux provenant d'une autre source dans des proportions variables et comprenant: un moyen à conduits (12) délimitant un premier et un second conduit (18, 20) disposés côte à côte et ayant des axes écartés l'un de l'autre, ledit moyen à conduits ayant une première extrémité et une seconde; un premier moyen (28) communiquant avec ledit premier conduit (18) pour aspirer du fluide de ladite première source vers l'intérieur à travers ledit premier conduit (18) en faisant passer le fluide de ladite extrémité extérieure à ladite extrémité intérieure; un second moyen (30) communiquant avec ledit second conduit (20) pour aspirer le fluide de ladite seconde source à travers ledit second conduit (20) de la dite extrémité intérieure à ladite extrémité extérieure; un moyen à chambre de transfert (36) raccordé audit premier conduit (18) et audit second conduit (20) en des positions écartées axialement et séparées l'une de l'autre pour transférer des proportions variables de fluide dudit second conduit (20) en le renvoyant dans ledit premier conduit (18); un moyen de sortie (48) communiquant avec une partie dudit moyen à chambre de transfert (36) pour évacuer de ce moyen du fluide amené par ledit second moyen (30); un moyen d'entrée (46) communiquant avec une autre partie dudit moyen à chambre de transfert (36) pour faire entrer du fluide alimentant ledit premier conduit (18) et un moyen de commande (50a, 50b) d'écoulement réglable actionné par force motrice, associé au moyen à chambre de transfert (36), ledit moyen de commande de l'écoulement répondant à des variations de température pour renvoyer l'écoulement provenant du second conduit (20) en retour dans ledit premier conduit (18), caractérisé en ce que ledit moyen de commande de l'écoulement comprend un moyen à deux volets ayant un premier et un second volets (50a, 50b) montés pour se déplacer à l'intérieur dudit moyen à chambre de transfert (36); un moyen de montage à pivotement (58a, 58b) pour le montage desdits volets (50a, 50b) le long d'un de leurs bords, les axes de pivotement étant écartés et parallèles l'un à l'autre et placés entre ledit moyen d'entrée et ledit moyen de sortie (46, 48) dans ladite chambre (36) et avec leurs bords opposés libres et dirigés vers lesdits conduits (18, 20), lesdits volets, lorsqu'ils ont pivoté ensemble pour venir parallèlement côte à côte en positions étroitement superposés et formant un moyen de cloisonnement, divisant pratiquement ladite chambre de transfert (36) en deux prolongements de conduits parallèles constituant des prolongements desdits premier et second conduits (18, 20), ayant des axes centraux qui sont parallèles et écartés, de sorte que le transfert de fluide de l'un à l'autre desdits conduits est pratiquement éliminé tandis que, quand ces volets ont pivoté pour s'écarter, le dit premier volet (50a) vient sur le passage dudit premier conduit (18) tandis que le second volet (50b) vient sur le passage dudit second conduit (20) en causant ainsi le transfert d'au moins une fraction de fluide dudit second conduit (20) en retour dans ledit premier conduit

(18); un moyen de liaison (60a, 60b) étant prévu pour relier entre eux lesdits volets (50a, 50b) de façon que ces volets se déplacent à l'unisson en sens contraires en réponse au fonctionnement d'un moyen actionné par force motrice (62, 64) relié au dit moyen à volets (50a, 50b) pour déplacer ces volets.

4. Dispositif selon la revendication 1 ou la revendication 2, dans lequel ledit moyen à deux volets comprend deux volets séparés (50a, 50b) et un moyen de montage à pivotement (52a, 58a, 52b, 58b) pour le montage desdits volets le long de deux bords adjacents, les axes de pivotement étant écartés l'un de l'autre et parallèles et les bords opposés étant libres et dirigés vers lesdits premier et second conduits (18, 20), lesdits volets (50a, 50b, quand ils ont pivoté ensemble pour se trouver parallèles l'un à l'autre côte, divisant ladite chambre de transfert (36) en deux prolongements de conduits parallèles qui constituent des prolongements en bout desdits premier et second conduits (18, 20) de sorte qu'un transfert de l'un desdits conduits à l'autre est pratiquement éliminé.

5. Dispositif selon la revendication 3 ou la revendication 4, dans lequel ledit moyen de montage à pivotement comprend des arbres parallèles écartés (58a, 58b) et dans lequel ledit moyen de liaison comprend des pignons (60a, 60b) montés sur les arbres respectifs en étant en engrènement.

6. Dispositif selon l'une quelconque des revendications 1—5, dans lequel ladite chambre de transfert (36) comprend une structure de boîtier rectangulaire avec ledit moyen d'entrée (46) dans une partie supérieure de ladite structure en boîtier et ledit moyen de sortie (48) dans une partie inférieure de ladite structure en boîtier.

7. Dispositif selon la revendication 6, dans lequel lesdits volets (50a, 50b) sont montés près d'une paroi terminale verticale (44) de ladite structure en boîtier et s'étendent à partir de cette paroi, quand ils sont parallèles en des positions côte à côte, en chevauchant une partie (16) dudit moyen à conduits.

8. Dispositif selon la revendication 1 ou selon l'une quelconque des revendications 5—7 quand elles se rattachent à la revendication 1, dans lequel le moyen à ventilateurs d'entrée et de sortie (28—30) est incorporé dans un ensemble (22) de montage des ventilateurs attaché à l'extrémité intérieure dudit moyen formant boîtier et pouvant en être séparé.

9. Dispositif selon la revendication 8, dans lequel ledit ensemble (22) de montage des ventilateurs est attaché audit boîtier au moyen de charnières (24) le long d'un de ses bords et comprenant un moyen de verrouillage sur un autre bord de façon qu'on puisse faire pivoter cet ensemble par rapport audit boîtier (12) et qu'on puisse le verrouiller en position sur ce boîtier.

10. Dispositif de commande de l'écoulement de gaz comprenant un premier conduit et un second (18, 20), un premier moyen et un second (28, 30) associés respectivement aux dits premier et second conduits (18, 20) pour établir des écoulements en sens contraires à travers lesdits conduits (18, 20), une chambre de transfert (36) ayant des moyens d'entrée et de sortie (46, 48) et communiquant avec lesdits premier et second conduits (18, 20) et des moyens réglables de commande de l'écoulement actionnés par force motrice (50a, 50b) associés à la chambre de transfert (36) et pouvant agir pour renvoyer l'écoulement provenant du second conduit (20) en retour dans le premier conduit (18), caractérisé en ce que ledit moyen de commande de l'écoulement comprend un moyen formant registre à deux volets (50a, 50b) monté à l'intérieur de ladite chambre de transfert (36), lesdits deux volets (50a, 50b) du moyen formant registre étant mobiles pour se rapprocher et s'écarter l'un de l'autre avec un moyen de liaison (60a, 60b) reliant ces volets entre eux de façon qu'ils se déplacent à l'unisson en sens contraires en réponse au fonctionnement de moyens actionnés par force motrice (62, 64) reliés au moyen formant registre, la disposition étant telle que, quand les deux volets (50a, 50b) se rapprochent l'un de l'autre à partir d'une position extrême dans laquelle ils sont complètement écartés, le degré de communication entre les deux conduits (18, 20) par l'intermédiaire de la chambre de transfert se trouve progressivement réduit tandis que le degré de communication entre le premier conduit (18) et le moyen d'entrée (46) d'une part et entre le second conduit (20) et le moyen de sortie (48) d'autre part se trouve progressivement augmenté.

**Patentansprüche**

1. Ventilationsvorrichtung für Scheunen und dgl., enthaltend:
— Ein Gehäuse (12) mit im wesentlichen rechteckiger Form;
— eine Leitungseinrichtung innerhalb des Gehäuses, die erste und zweite Leitungen (18, 20) bildet, wobei das Gehäuse so ausgebildet ist, daß es durch einen Teil (W) der Scheune oder dgl. hindurchpaßt sowie ein inneres Ende und ein äußeres Ende aufweist, von denen das innere Ende auf der Innenseite des genannten Scheunenteiles (W) angeordnet ist;
— einen am Gehäuse (12) montierten Einlaßlüfter (28), der mit der ersten Leitung (18) in Verbindung steht, um Luft durch diese erste Leitung (18) in die Scheune hineinzuziehen;
— einen am Gehäuse (12) in Verbindung mit der genannten zweiten Leitung (20) montierten Auslaßlüfter (30), um Luft aus dem Innern der Scheune abzuziehen und sie durch die zweite Leitung (20) auszustoßen;
— eine Überführungskammer (36), die mit dem äußeren Ende der Leitungseinrichtung in Verbindung steht;
— einen Luftauslaß (48), der mit der Überführungskammer (36) in Verbindung steht, um Luft daraus abzugeben, wobei die Überführungskammer (36) mit den beiden Leitungen (18, 20) des Gehäuses in Verbindung steht und einen Übergang von Luft aus der einen Leitung in die andere gestattet; und
— eine einstellbare, kraftgetriebene Strömungsleiteinrichtung (50a, 50b), die mit der Überführungskammer (36) in Verbindung steht und auf Temperaturänderungen in der Scheune anspricht, um einen Strom aus der zweiten Leitung (20) in die erste Leitung (18) zurückzuleiten, dadurch gekennzeichnet, daß die Strömungsleiteinrichtung eine zweiteilige Drosseleinrichtung (50a, 50b) enthält, die innerhalb der Überführungskammer (36) bewegbar angeordnet sind, wobei die beiden Teile (50a, 50b) der Drosseleinrichtung aufeinander zu und voneinander weg bewegbar und betätigbar sind, um aus der zweiten Leitung (20) abströmende Luft abzufangen und in die erste Leitung (20) zurückzuleiten, und daß eine Verbindungseinrichtung (60a, 60b) vorgesehen ist, um die beiden Teile (50a, 50b) der Drosseleinrichtung miteinander zu verbinden, wodurch sie sich im Einklang miteinander in entgegengesetzten Richtungen bewegen, im Ansprechen auf eine Betätigung einer Antriebseinrichtung (62, 64), die mit der zweiteiligen Drosseleinrichtung verbunden ist.

2. Regelvorrichtung für Gasströme, enthaltend erste und zweite Leitungen (18, 20), erste und zweite Einrichtungen (28, 30), die in entsprechender Weise mit den ersten und zweiten Leitungen (18, 20) verbunden sind, um entgegengesetzt gerichtete Ströme durch diese Leitungen (18, 20) zu erzeugen, eine Überführungskammer (36), die Einlaß- und Auslaßeinrichtungen (46, 48) aufweist und mit den ersten und zweiten Leitungen (18, 20) in Verbindung steht, sowie eine einstellbare, kraftgetriebene Strömungsleiteinrichtung (50a, 50b), die mit der Überführungskammer (36) in Verbindung steht und betätigbar ist, um einen Strom aus der zweiten Leitung (20) in die erste Leitung (18) zurückzuleiten, dadurch gekennzeichnet, daß die Strömungsleiteinrichtung eine innerhalb der Überführungskammer (36) montierte, zweiteilige Drosseleinrichtung (50a, 50b) enthält, deren beide Teile (50a, 50b) aufeinander zu und voneinander weg bewegbar und betätigbar sind, um den Strom aus der zweiten Leitung (20) abzufangen und ihn in die erste Leitung (18) zurückzuleiten, und daß eine Verbindungseinrichtung (60a, 60b) vorgesehen ist, um die beiden Teile (50a, 50b) der Drosseleinrichtung miteinander zu verbinden, wodurch dieselben sich im Einklang miteinander in entgegengesetzten Richtungen bewegen, im Ansprechen auf eine Betätigung einer mit der Drosseleinrichtung verbundenen Antriebseinrichtung (62, 64).

3. Regelvorrichtung für Gasströme für einen Austausch eines gasförmigen Fluids von einer Quelle mit einem gasförmigen Fluid von einer anderen Quelle in veränderbaren Anteilen, enthaltend:

— eine Leitungseinrichtung (12), die erste und zweite Leitungen (18, 20) bildet, die nebeneinander angeordnet sind und mit Abstand voneinander angeordnete Achsen aufweisen, wobei die Leitungseinrichtung ein erstes Ende und ein zweites Ende besitzt;

— eine mit der ersten Leitung (18) in Verbindung stehende erste Einrichtung (28) zum Ansaugen von Fluid aus der genannten einen Quelle nach innen durch die erste Leitung (18) sowie vom äußeren Ende zum inneren Ende;

— eine mit der zweiten Leitung (20) in Verbindung stehende zweite Einrichtung (30), zum Ansaugen von Fluid von der genannten zweiten Quelle durch diese zweite Leitung (20) und vom inneren Ende zum äußeren Ende;

— eine Überführungskammer (36), die mit der ersten Leitung (18) und mit der zweiten Leitung (20) an Stellen verbunden ist, die einen axialen Abstand voneinander aufweisen und voneinander getrennt sind, um veränderliche Anteile des Fluids aus der zweiten Leitung (20) zurück in die erste Leitung (18) zu überführen;

— einen mit einem Teil der Überführungskammer (36) in Verbindung stehenden Auslaß (48), um daraus Fluid abzugeben, das durch die erwähnte zweite Einrichtung (30) zugeführt ist;

— einen mit einem anderen Teil der Überführungskammer in Verbindung stehenden Einlaß (46), um dort Fluid für eine Zufuhr zur ersten Leitung (18) hereinzulassen; und

— eine mit der Überführungskammer (36) in Verbindung stehende, einstellbare, kraftgetriebene Strömungsleiteinrichtung (50a, 50b), die auf Temperaturänderungen anspricht, um einen Strom aus der zweiten Leitung (20) in die erste Leitung (18) zurückzuleiten, dadurch gekennzeichnet,

— daß die Strömungsleiteinrichtung eine zweiteilige Drosseleinrichtung mit ersten und zweiten Drosselflügeln (50a, 50b) enthält, die innerhalb der Überführungskammer (36) bewegbar montiert sind;

— daß eine Schwenkhalterungseinrichtung (58a, 58b) die Drosselflügel (50a, 50b) entlang benachbarter Kanten haltert, wobei ihre Schwenkachsen mit Abstand voneinander, parallel zueinander sowie zwischen den Ein- und Auslässen (46, 48) in der Überführungskammer (36) angeordnet sind und wobei ihre entgegengesetzten Kanten frei und auf die genannten Leitungen (18, 20) gerichtet sind, wobei ferner die Drosselflügel (50a, 50b) dann, wenn sie gegeneinander geschwenkt sind, dicht übereinander liegend parallel Seite an Seite liegen und eine Trennwand bilden, die Überführungskammer (36) im wesentlichen in zwei parallele Leitungsverlängerungen unterteilen, die Endverlängerungen der ersten und zweiten Leitungen (18, 20) mit Mittelachsen bilden, die parallel und mit Abstand voneinander verlaufen, wodurch ein Fluidübergang von der einen Leitung in die andere im wesentlichen verhindert wird, während im auseinandergeschwenkten Zustand der erste Drosselflügel (50a) sich in den Weg der ersten Leitung (18) und der zweite Drosselflügel (50b) sich in den Weg der zweiten Leitung (20) bewegt, wodurch ein Übergang von wenigstens einem Teil des Fluids aus der zweiten Leitung (20) zurück in die erste Leitung (18) bewirkt wird;

— daß eine Verbindungseinrichtung (60a, 60b) vorgesehen ist, um die Drosselflügel (50a, 50b) miteinander zu verbinden, wodurch diese sich im Einklang miteinander in entgegengesetzten Richtungen im Ansprechen auf die Betätigung von einer Antriebseinrichtung bewegen, die mit den Drosselflügeln (50a, 50b) zwecks Bewegung derselben verbunden ist.

4. Vorrichtung nach Anspruch 1 oder 2, dadurch gekennzeichnet, daß die zweiteilige Drosseleinrichtung zwei separate Drosselflügel (50a, 50b) und eine Schwenkhalterungseinrichtung (52a, 58a, 52b, 58b) enthält, die jeden der Drosselflügel entlang benachbarter Kanten haltert, wobei deren Schwenkachsen mit Abstand voneinander sowie parallel zueinander liegen und wobei ihre entgegengesetzten Kanten frei sind sowie in Richtung auf die ersten und zweiten Leitungen (18, 20) weisen, und wobei diese Drosselflügel (50a, 50b) ferner, wenn sie zusammengeschwenkt sind, parallel Seite an Seite liegen und die Überführungskammer (36) im wesentlichen in zwei parallele Leitungsverlängerungen unterteilen, die Endverlängerungen der ersten und zweiten Leitungen (18, 20) bilden, wodurch ein Übergang von der ersten Leitung zur anderen im wesentlichen aufgehoben ist.

5. Vorrichtung nach Anspruch 3 oder 4, dadurch gekennzeichnet, daß die Schwenkhalterungseinrichtung zwei parallele, mit Abstand voneinander angeordnete Achsen (58a, 58b) aufweist und daß die Verbindungseinrichtung Zahnräder (60a, 60b) enthält, die auf entsprechenden Achsen angeordnet sind und in Verzahnungseingriff stehen.

6. Vorrichtung nach einem der Ansprüche 1 bis 5, dadurch gekennzeichnet, daß die Überführungskammer (36) einen rechteckigen, kastenartigen Aufbau mit einem Einlaß (46) in einem oberen Teil des kastenartigen Aufbaus und einem Auslaß (48) in einem unteren Teil des kastenartigen Aufbaues aufweist.

7. Vorrichtung nach Anspruch 6, dadurch gekennzeichnet, daß die Drosselflügel (50a, 50b) in der Nähe der vertikalen Endwand (44) des kastenartigen Aufbaues montiert sind und sich von dort aus, wenn sie sich in einer parallelen Seite-an-Seite-Position befinden, in ein Überlappungsverhältnis mit einem Teil (16) der genannten Leitungseinrichtung erstrecken.

8. Vorrichtung nach Anspruch 1 oder einem der Ansprüche 5 bis 7, wenn sie von Anspruch 1 abhängig sind, dadurch gekennzeichnet, daß die Einlaß- und Auslaßlüfter (28, 30) in eine Lüfterhalterungsanordnung (22) eingebaut sind, die am inneren Ende des genannten Gehäuses angebracht und davon lösbar, entfernbar ist.

9. Vorrichtung nach Anspruch 6, dadurch gekennzeichnet, daß die Lüfterhalterungsanordnung (22) am Gehäuse mittels Scharniergelenke (24) entlang ihrer einen Kante angebracht ist und an ihrer anderen Kante eine Verriegelungseinrichtung enthält, wodurch sie relativ zum genannten Gehäuse (12), hin- und herschwenkbar sowie in der Position daran verriegelbar ist.

10. Regelvorrichtung für Gasströme, enthaltend erste und zweite Leitungen (18, 20), erste und zweite Einrichtungen (28, 30), die in entsprechender Weise mit den ersten und zweiten Leitungen (18, 20) in Verbindung stehen, um entgegengesetzt gerichtete Strömungen durch diese Leitungen (18, 20) zu erzeugen, eine Überführungskammer (36), die Ein- und Auslässe (46, 48) aufweist und mit den ersten und zweiten Leitungen (18, 20) in Verbindung steht, sowie eine Strömungsleiteinrichtung (50a, 50b), die mit der Überführungskammer (36) in Verbindung steht und betätigbar ist, um eine Strömung aus der zweiten Leitung (20) in die erste Leitung (18) zurückzuleiten, dadurch gekennzeichnet, daß die Strömungsleiteinrichtung eine innerhalb der Überführungskammer (36) montierte zweiteilige Drosseleinrichtung (50a, 50b) enthält, deren beide Teile (50a, 50b) mit einer Verbindungseinrichtung (60a, 60b) aufeinander zu und voneinander weg bewegbar sind, die sie so miteinander verbindet, daß sie sich im Einklang miteinander in entgegengesetzten Richtungen im Anspruchen auf eine Betätigung einer Antriebseinrichtung (62, 64) bewegen, die mit der Drosseleinrichtung verbunden ist, wobei die Anordnung derart ist, daß, wenn die beiden Teile (50a, 50b) sich aus einer Extremstellung, in der sie vollkommen voneinander getrennt sind, sich aufeinander zubewegen, der Grad der Verbindung zwischen den beiden Leitungen (18, 20) über die Überführungskammer zunehmend verkleinert wird, während die Größe der Verbindung zwischen der ersten Leitung (18) und dem Einlaß (26) einerseits und zwischen der zweiten Leitung (20) und dem Auslaß (48) andererseits allmählich zunimmt.

0 009 359

FIG. 1

FIG. 2

FIG. 4

M
VS   28

74

M
VS   30

70

M
64

72

50a   50b

46   48

D   D

28   30

34

FIG. 5

10   36   38

14   12

18   46

44

40

24

50a

28   16

50b

64

40

26

20

22   30   42   48   FIG. 3